(19) **Europäisches Patentamt**

**European Patent Office**

**Office européen des brevets**

(11) **EP 0 579 401 B1**

(12) **EUROPEAN PATENT SPECIFICATION**

(45) Date of publication and mention
of the grant of the patent:
**08.12.1999 Bulletin 1999/49**

(51) Int Cl.$^6$: **H04B 10/16**

(21) Application number: **93305003.1**

(22) Date of filing: **25.06.1993**

(54) **Optical transmission system including optical repeaters and regenerators**

Optisches Nachrichten Übertragungssystem mit optischen Relaisstationen und Regeneratoren

Système optique de transmission comprenant des répéteurs optiques et des régénerateurs

(84) Designated Contracting States:
**DE FR GB IT SE**

(30) Priority: **27.06.1992 GB 9213696**

(43) Date of publication of application:
**19.01.1994 Bulletin 1994/03**

(73) Proprietor: **ALCATEL**
**75008 Paris (FR)**

(72) Inventors:
 • **Chown, Martin**
 **Harlow, Essex (GB)**
 • **Farrington, Jeffrey Graham**
 **Bishop's Stortford, Herts (GB)**
 • **Kirkby, Paul Anthony**
 **Harlow, Essex CM17 0BB (GB)**

(74) Representative: **Lamoureux, Bernard et al**
**COMPAGNIE FINANCIERE ALCATEL**
**Département Propriété Industrielle**
**30, avenue Kléber**
**75116 Paris (FR)**

(56) References cited:
 • **IEEE JOURNAL ON SELECTED AREAS IN COMMUNICATION vol. 9, no. 5, June 1991, NEW YORK US pages 673 - 681 K.HAGIMOTO ET AL 'Over 10 Gb/s Regenerators Using Monolithic ICs for Lightwave Communication Systems'**
 • **IEEE PHOTONICS TECHNOLOGY LETTERS vol. 2, no. 9, September 1990, NEW YORK US pages 662 - 664 D.A.FISHMAN ET AL 'A high Capacity Noncoherent FSK Lightwave Field Experiment using Er - Doped Fiber Optical Amplifiers'**
 • **IEEE LCS. THE MAGAZINE OF LIGHTWAVE COMMUNICATION SYSTEMS vol. 1, no. 4, November 1990, NEW YORK US pages 57 - 62 K.NAKAGAWA ET AL 'Optical Amplifiers in Future Optical Communication Systems'**
 • **OPTICS LETTERS. vol. 16, no. 14, 15 July 1991, NEW YORK US pages 1116 - 1118 M.N.ISLAM ET AL 'All-optical timing restoration using a Hybrid time-domain chirp switch'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

This invention relates to long-haul, e.g. transoceanic optical transmission systems.

### BACKGROUND OF THE INVENTION

A conventional long-haul optical transmission system, e.g. a submarine system, incorporates an optical fibre cable provided at intervals with regenerators or repeaters whereby the transmitted signal is regenerated along the transmission path. Each repeater converts incoming optical signals to corresponding electrical signals which are then processed and retied prior to re conversion to optical signals for transmission along the next leg of the path.

As the regenerators have to perform a number of signal handling functions in addition to their basic regeneration or amplifying function, they are complex in construction and thus relatively costly. Indeed, the cost of the regenerators can represent a very significant proportion of the installed system cost.

Over recent years the problem of the system cost has been addressed in two ways. Firstly the system bit rate has been increased to allow the provision of more circuits and thus reduce the cost per circuit. This has been achieved by improvements in fibre quality and by advances in electric circuit development. Any future increases in bit rate are of course dependent on further such developments. Further, it is considered that there may be a fundamental limit of the bit rate beyond which it is not possible to provide effective transmission of signals. It is thought that for a long length of dispersive fibre this fundamental limit is of the order of 5 Gbit/sec.

An alternative approach that has recently been proposed is the use of optical amplifying systems. In such a system the conventional repeaters are replaced by linear optical amplifiers, e.g. erbium amplifiers. This results in a very significant reduction in the system costs as the amplifiers are relatively simple devices. However, the consequence of using linear amplifiers instead of repeaters Is that impairments such as noise, distortion and non-linearity accumulate through the system. A particular problem is the dispersion of the fibre. Over a long-haul system the fibre dispersion must be very low to reduce the cumulative effects of chromatic dispersion.

From the publication "Over 10 Gb/s regenerators using monolith ICs for lightwave communication systems", Hagimoto et al., IEEE Journal of Selected Areas in Communications, 9/5, 1991 it is known, that optical amplifiers can combined with opto-electronic repeaters to get better bit error rates. Optical fiber amplifiers are used because of their gain bandwidth and their high-speed performance. The problem is the quality of the signals dispersed in the transmission system.

"Optical Amplifiers in Future Optical Communication Systems", Nakagawa et al., IEEE Lightwave Communication Systems, 1/4, 1990 discloses a combination of optical amplifiers and repeaters for a transmission system. A optical signal is amplified by up to 25 fiber amplifiers to enhance signal level.

The object of the present invention is to minimize or to overcome these problems and give a solution to maintain signal quality, e.g. signal/noise ratio, pulse shaping, signal level over long distances.

### SUMMARY OF THE INVENTION

According to the invention there is provided an optical transmission system.

An optical transmission subsystem, including an input regenerator (15a), an output regenerator (15b), an optical fiber transmission path therebetween, and a plurality of optical amplifiers (14) disposed substantially evenly along said path, characterized in that the spacing between the regenerators (15a, 15b) being selected so as to achieve a predetermined signal/noise ratio at the input of the output regenerator (15b) following the relation

$$\frac{P_2}{N} = \frac{P_1 \cdot S}{G \cdot L \cdot N_s}$$

with

P1 power output of each amplifier
P2 power at the input of regenerator 15a
S inter-amplifier spacing
G gain of amplifiers
L total path length
N total noise
Ns noise of each amplifier

The implies a relatively small number of regenerators which provides periodic 'cleanup' of the transmitted signals and thus allows transmission over long distances without the need to provide high cost low dispersion fibre.

### BRIEF DESCRIPTION OF THE DRAWINGS

Embodiments of the invention will now be described with reference to the accompanying drawings, in which:

Fig. 1 is a schematic diagram of a optical transmission system incorporating both optical amplifiers and opto-electronic regenerators;
Fig. 2 illustrated the relationship between the regenerator spacing distance and the optical amplifier spacing distance of the system of Fig. 1;
Fig. 3 illustrates a basic subsystem from which the system of Fig. 1 may be constructed;
Fig. 4 illustrates the effects of forward error correction coding in the system of Fig. 1; and

Figs. 5 and 6 illustrates respective supervisory arrangements for the system of Fig. 1.

## DESCRIPTION OF PREFERRED EMBODIMENT

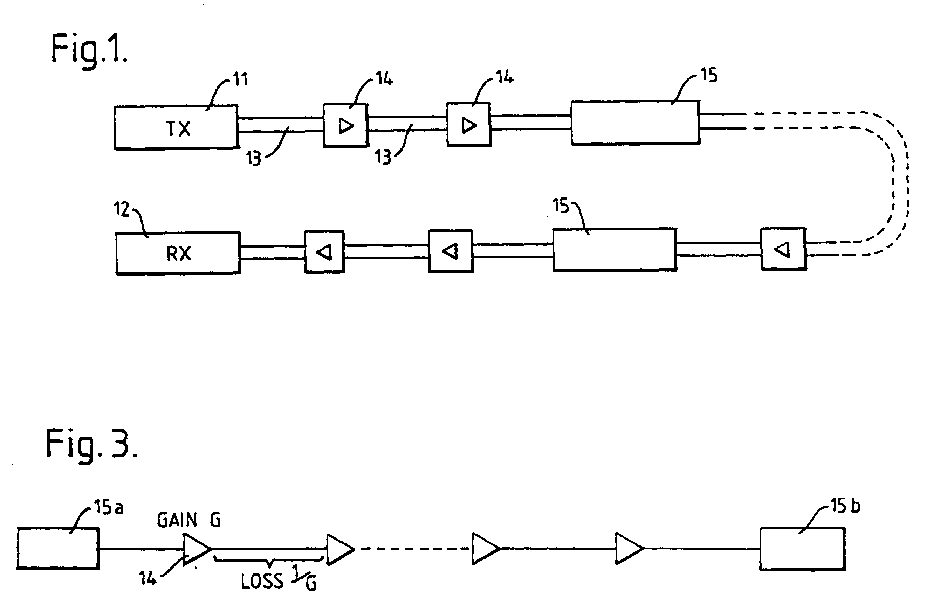

Referring to Fig. 1, the system includes an optical transmitter 11 coupled to a remote receiver 12 via an optical fibre path 13, e.g. a submarine cable. The path 13 incorporates a number of linear optical amplifiers 14, e.g. erbium amplifiers disposed at regular intervals along the path. The amplifiers 14 may comprise each a length of amplifying fibre that is pumped by a laser. The system further includes a number of repeaters or regenerators 15 disposed at intervals along the path. For clarity Fig. 1 shows only a single optical path between the regenerators 15, but it will be appreciated that this path will in general comprise a number of optical fibres each having its own concatenated series of amplifiers. Typically there are six fibre paths, but this number is of course not critical. Such an arrangement provides both a high traffic capacity and a facility for routing around faults. This latter facility is not available in a conventional amplified system. The number of regenerators 15 is significantly less than that of the amplifiers 14, there being typically one repeater 15 for every 7 to 10 amplifiers. For transatlantic distances we would require about 10 regenerators and between 70 and 100 amplifiers.

It will be appreciated that a signal that is repeatedly amplified by a number of linear amplifiers becomes degraded by the cumulative effects of e.g. noise and optical dispersion. The latter effect causes broadening of the signal pulses. The purpose of the repeaters 15 is thus periodically to reshape and retransmit the signal to overcome these cumulative effects. The repeaters may comprise '3R' repeaters which convert received optical signals into corresponding electrical signals. These electrical signals are then reshaped and retimed before being retransmitted as regenerated optical signals. In some applications retiming of the signals may be dispensed with as will be discussed below.

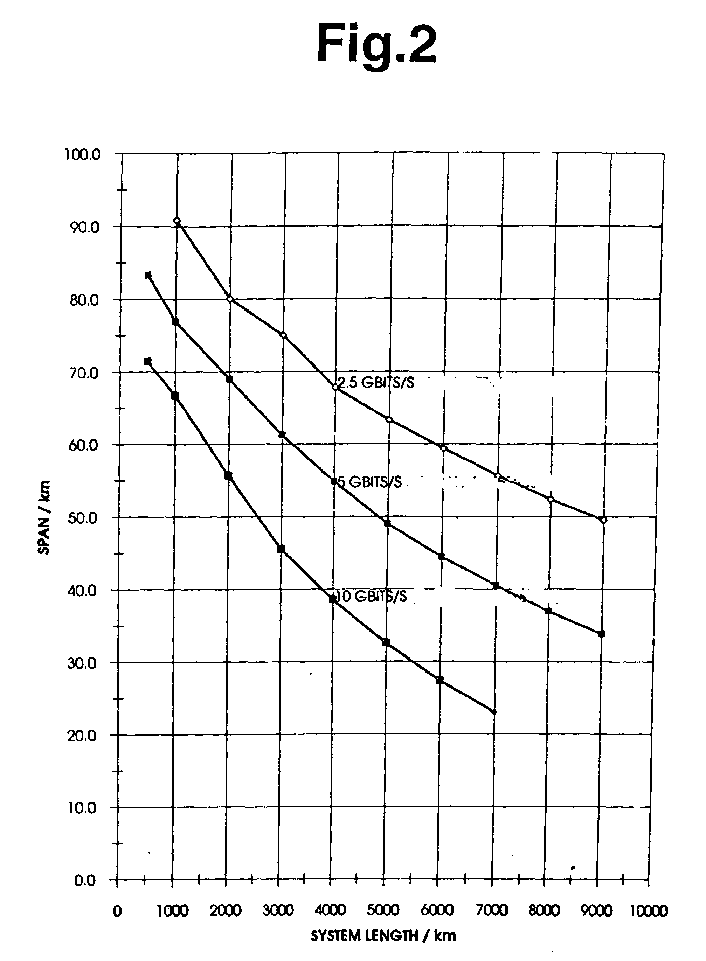

The amplifier/repeater hybrid arrangement described above has important and unexpected advantages over conventional non-hybrid systems. Firstly, it allows a significant reduction in the cost of the optical fibre employed in comparison with an all-amplifier system. As the transmitted signal is regenerated at regular intervals the effects of fibre dispersion are much reduced and it is thus possible to employ relatively low cost and low specification fibre. This contrasts with the high cost low dispersion fibres that are considered essential for use in all-amplifier systems. Secondly, the use of regenerators allows a considerable increase in the spacing between amplifiers when compared with an all amplifier system. This effect is illustrated in Fig. 2 which shows the relationship between amplifier spacing and unrepeatered transmission distance for transmission bit rates of 2.5 Gbit/s, 5 Gbit/s and 10 Gbit/s. As can be seen from Fig. 2, as the unregenerated space increases, the distance between amplifiers decreases, this effect being most pronounced at high bit rates. For example, a long haul system 6000Km in length would require an amplifier spacing of only 45Km for a bit rate of 5 Gbit/s in the absence of any regeneration. The incorporation of a small number of regenerators, e.g. one regenerator at every 1000Km, to provide a hybrid system, allows the spacing between amplifiers to be increased e.g. to about 125Km thus resulting in a significant cost saving. Thirdly, the relatively small number of regenerators permits the introduction of wavelength division multiplexing. This can significantly increase the effective capacity of the system. The provision of wavelength division multiplexing in a conventional system with a relatively large number of regenerators is not economically feasible as the total system cost of providing, in each regenerator, circuitry for each wavelength would then be prohibitive.

In addition, as discussed above the provision of regenerators provides a facility for routing around system faults. Where one amplified fibre path between two regenerators become defective, e.g. as a result of a fibre break or an amplifier failure, the traffic previously carried on that path can be rerouted to one or more of the other fibre paths between the regenerators. This provides a significant increase in system reliability in comparison with an equivalent all-amplifier system.

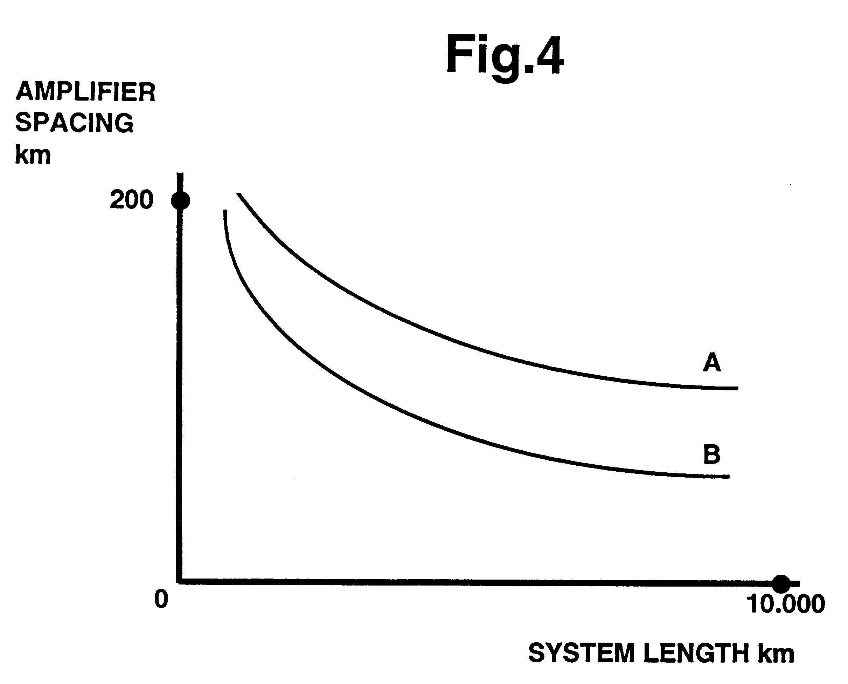

By way of example the design of a hybrid system will be discussed with particular reference to Fig. 3 which illustrates one amplified span or path of total length L between two regenerators (15a, 15b). Each optical amplifier (14) in the path is assumed to have a gain G and an optimum power output $P_1$. The system is designed to provide a bit error rate less than a predetermined value.

In the amplifier path of Fig. 3, the bit error rate is determined by the signal/noise ratio P/N at the input of the regenerator 15b. It is assumed that spontaneous noise $N_s$ is present at the input of each amplifier. For each amplified section this spontaneous noise is increased by the amplifier gain G and is decreased by the fibre loss $1/_G$. The spontaneous noise thus increases linearly and the total noise N at the input of the repeater 15b is given by:

$$N = nN_s$$

when n is the number of amplifiers in the path.

Further,

$$n = \frac{L}{\Delta S}$$

where $\Delta S$ is the inter-amplifier spacing and L is the total path length.

Also we have

$$P_2 = P_{1/G}$$

where P2 is the power at the input of the regenerator 15b.

Hence we have

$$\frac{P2}{N} = \frac{P1}{G} \cdot \frac{S \cdot}{LN_s}$$

but the gain G is equal to exp {αS} where α is the fibre loss, typically 0.2dB per kilometre;

$$i.e. \ S.exp\{-\alpha S\} = L\left\{\frac{(P2)}{(N)} \frac{Ns\}}{P1\}}\right.$$

Solution of this equation gives the required inter-amplifier spacing for a particular span length L and for a particular signal to noise ratio.

The ratio P2/N is determined by the system coding/decision circuitry and $N_s$ depends on the amplifier design.

The inter-amplifier spacing may be increased by the use of forward error correcting coding techniques which reduce the bit error rate and improve the signal to noise ratio. This effect is illustrated in Fig. 4 which shows the typical relationship between amplifier spacing and system length for uncoded transmission (curve B) and forward error corrected transmission (curve A). In practice the improvement achieved will depend on the complexity of the code. There will in general be a trade-off between code complexity and the cost of providing amplifiers.

It will be appreciated that the transmission path or span discussed above is effectively a subsystem of a larger transmission path, or in some applications a single span may be used as a medium haul path. The arrangement has the advantage that it can provide a standard subsystem e.g. of about 1000Km in length which is usable on all routes, an appropriate number of such subsystems being concatenated to achieve the desired transmission distance.

It will also be appreciated that it is necessary to provide a means of supervision of the system e.g. for fault detection so that remedial action may be taken. In particular it is necessary to supervise the operation of both the regenerators and amplifiers. The regenerators may be supervised by conventional techniques over a supervisory channel, but supervision of the amplifiers must take account of the periodic conversion of the information carrying optical signals into electrical signals for processing by the regenerators.

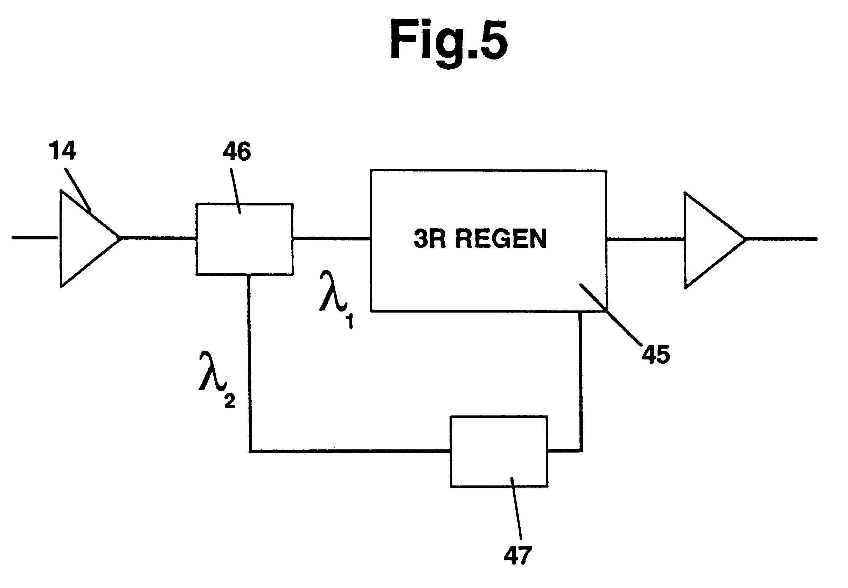

A suitable supervisory technique is illustrated in Fig. 5 of the drawings. This shows a system in which regeneration of the optical signals carrying communications traffic is provided by 3R regenerators 45. This communications traffic is carried on the optical path at a first wavelength λ1, (or a set of wavelengths), and the supervisory channel is carried at a further wavelength λ2. At the input of each regenerator 45, the supervisory channel is filtered off by a wavelength demultiplexer 46 and is fed to a regenerator device 47 comprising a photodetector and an electronic amplifier. The output of the regenerator device 47 is fed to the output side of the regenerator 45 for reconversion to corresponding light signals of wavelength λ2 for retransmission to the fibre path. The optical amplifier signals thus have an effectively transparent path through the system.

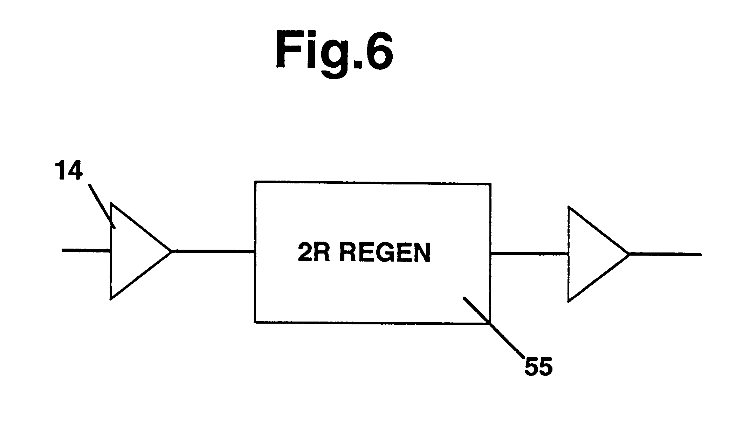

An alternative arrangement is illustrated in Fig. 6 in which the conventional 3R regenerators are replaced by simple (2R) regenerator devices 55 which regenerate and retransmit signals but which do not perform retiming of the signals. Removal of the timing requirement reduces the cost of the regenerator and also renders the system substantially independent of bit rate.

In the arrangement of Fig. 6 the supervisory signals pass effectively transparently through the system. In particular, as there is no retiming, the supervisory system may employ pulse width modulation to carry the necessary information. We have found that in the hybrid system described above retiming of signals is not critical and that the use of e.g. of a limiting amplifier in the regenerator provides sufficient clean-up of the transmitted signals. It will also be appreciated the removal of the retimingconstraint allows future re-engineering of the system e.g. to accommodate high bit rates whereby to increase the traffic handling capacity of the system.

It will be understood that although the hybrid transmission system has been described with particular reference to transoceanic application it is also applicable to land line use.

**Claims**

1. An optical transmission subsystem, including an input regenerator (15a), an output regenerator (15b), an optical fiber transmission path therebetween, and a plurality of optical amplifiers (14) disposed substantially evenly along said path, characterized in that the spacing between the regenerators (15a, 15b) being selected so as to achieve a predetermined signal/noise ratio at the input of the output regenerator (15b) following the relation

$$\frac{P_2}{N} = \frac{P_1 \cdot S}{G \cdot L \cdot N_s}$$

with

P1 power output of each amplifier
P2 power at the input of regenerator 15a

S inter-amplifier spacing
G gain of amplifiers
L total path length
N total noise
Ns noise of each amplifier

2. An optical transmission system comprising a concatenated arrangement of subsystems as claimed in claim 1.

3. An optical transmission system as claimed in claim 1 or 2, characterized in that the number of amplifiers (14) is between seven and ten times the number of regenerators (15).

4. An optical transmission system as claimed in claim 1 to 3, characterized in that each regenerator (15) provides reshaping and retransmission of said optical signals.

5. An optical transmission system as claimed 4 and incorporating means for pulse width modulation of pulses transmitted in the system.

6. An optical transmission system as claimed in any one of claims 1 to 5, characterized in that each said regenerator (15) is provided with means for processing wavelength division multiplexed signals.

7. An optical transmission system as claimed in any one of claims 1 to 6, characterized in that each said optical amplifier (14) includes a laser pumped amplifying fiber element.

8. An optical transmission system as claimed in claim 7, characterized in that each said amplifying fiber element comprises a length of erbium doped silica fiber.

**Patentansprüche**

1. Optisches Übertragungssubsystem, umfassend einen Eingangsregenerator (15a), einen Ausgangsregenerator (15b), einen Lichtwellenleiterübertragungsweg dazwischen und eine Mehrzahl von optischen Verstärkern (14), die im wesentlichen gleichmäßig entlang des Weges angeordnet sind, dadurch gekennzeichnet, daß der Abstand zwischen den Regeneratoren (15a, 15b) so gewählt ist, daß am Eingang des Ausgangsregenerators (15b) ein vorbestimmtes Signal-Rausch-Verhältnis erzielt wird, das der Beziehung

$$\frac{P_2}{N} = \frac{P_1 \cdot S}{G \cdot L \cdot N_s}$$

folgt, mit

$P_1$ abgegebene Leistung jedes Verstärkers
$P_2$ Leistung am Eingang des Regenerators 15a
S Abstand zwischen Verstärkern
G Verstärkung der Verstärker
L Gesamtweglänge
N Gesamtrauschen
$N_s$ Rauschen jedes Verstärkers

2. Optisches Übertragungssystem, umfassend eine verkettete Anordnung von Subsystemen nach Anspruch 1.

3. Optisches Übertragungssystem nach Anspruch 1 oder 2, dadurch gekennzeichnet, daß die Anzahl von Verstärkern (14) zwischen dem Sieben- und Zehnfachen der Anzahl der Regeneratoren (15) beträgt.

4. Optisches Übertragungssystem nach Anspruch 1 bis 3, dadurch gekennzeichnet, daß jeder Regenerator (15) für eine Formregeneration und Weiterübertragung der optischen Signale sorgt.

5. Optisches Übertragungssystem nach Anspruch 4 und umfassend eine Einrichtung zur Pulsbreitenmodulation von im System übertragenen Impulsen.

6. Optisches Übertragungssystem nach einem der Ansprüche 1 bis 5, dadurch gekennzeichnet, daß jeder Regenerator (15) mit einer Einrichtung zum Verarbeiten von Wellenlängenmultiplex-Signalen versehen ist.

7. Optisches Übertragungssystem nach einem der Ansprüche 1 bis 6, dadurch gekennzeichnet, daß jeder optische Verstärker (14) ein lasergepumptes verstärkendes Faserelement enthält.

8. Optisches Übertragungssystem nach Anspruch 7, dadurch gekennzeichnet, daß jedes besagte verstärkende Faserelement eine Länge von mit Erbium dotierter Siliciumdioxidfaser umfaßt.

**Revendications**

1. Sous-système de transmission optique, comprenant un régénérateur d'entrée (15a), un régénérateur de sortie (15b), un trajet de transmission à fibre optique placé entre eux, et plusieurs amplificateurs optiques (14) disposés de manière pratiquement régulière le long du trajet, caractérisé en ce que l'espacement des régénérateurs (15a, 15b) est sélectionné afin qu'il donne un rapport signal-sur-bruit prédéterminé à l'entrée du régénérateur de sortie (15b) correspondant à la relation :

$$\frac{P_2}{N} = \frac{P_1 . S}{G.L.N_s}$$

$P_1$ étant la puissance fournie par chaque amplificateur,

$P_2$ la puissance à l'entrée du régénérateur (15a),

S l'espacement des amplificateurs,

G le gain des amplificateurs,

L la longueur totale du trajet,

N le bruit total, et

$N_s$ le bruit de chaque amplificateur.

2. Système de transmission optique comprenant un ensemble chaîné de sous-systèmes selon la revendication 1.

3. Système de transmission optique selon la revendication 1 ou 2, caractérisé en ce que le nombre d'amplificateurs (14) est compris sept fois et dix fois le nombre de régénérateurs (15).

4. Système de transmission optique selon l'une des revendications 1 à 3, caractérisé en ce que chaque régénérateur (15) assure une remise en forme et une retransmission des signaux optiques.

5. Système de transmission optique selon la revendication 4, comprenant un dispositif de modulation par impulsions de largeur variable des impulsions transmises dans le système.

6. Système de transmission optique selon l'une quelconque des revendications 1 à 5, caractérisé en ce que chaque régénérateur (15) comporte un dispositif de traitement de signaux multiplexés en longueurs d'onde.

7. Système de transmission optique selon l'une quelconque des revendications 1 à 6, caractérisé en ce que chaque amplificateur optique (14) comporte un élément à fibre amplificatrice à pompage par un laser.

8. Système de transmission optique selon la revendication 7, caractérisé en ce que chaque élément à fibre amplificatrice comprend un tronçon de fibre de silice dopée par de l'erbium.

Fig.1.

Fig.3.

# Fig.2

# Fig.4

EP 0 579 401 B1

**Fig.5**

$\lambda_2$

$\lambda_1$

3R REGEN

14

46

47

45

2R REGEN

14

55

Fig.6